# EUROPÄISCHE PATENTSCHRIFT

(11) **EP 0 709 558 B1**
(45) Veröffentlichungstag und Bekanntmachung des Hinweises auf die Patenterteilung: **10.03.1999**
(21) Anmeldenummer: 95114179.5
(22) Anmeldetag: 09.09.1995
(51) Int. Cl.: F01N 7/18, F16L 27/11, F16L 51/02

(54) **Leitungselement, insbesondere für die Abgasleitung von Verbrennungskraftmaschinen**
Conduit element, especially for the exhaust conduit of an internal combustion engine
Elément de conduit pour la conduite des gaz d'échappement d'un moteur à combustion interne

(30) Priorität: 26.10.1994 DE 4438213
(43) Veröffentlichungstag der Anmeldung: 01.05.1996
(73) Patentinhaber: Witzenmann GmbH Metallschlauch-Fabrik Pforzheim, D-75175 Pforzheim (DE)
(72) Erfinder: Pluschke, Michael, D-75395 Neuenbürg-Rotenbach (DE); Winzen, Wilfried, Dr., D-75175 Pforzheim (DE)
(74) Vertreter: Lemcke, Rupert, Dipl.-Ing.

(56) Entgegenhaltungen:
- EP-A- 0 282 689
- DE-A- 2 558 478
- GB-A- 1 291 253

## Beschreibung

Die Erfindung betrifft ein Leitungselment, insbesondere für die Abgasleitung von Verbrennungskraftmaschinen, bestehend aus einem Metallschlauch oder Balg mit über seine Länge im wesentlichen gleichbleibendem Außendurchmesser und mit einem außerhalb des Metallschlauches oder Balges entlang diesem angeordneten und mit dessen Enden verbundenen Geflechtsschlauch aus Metall zur flexiblen Abstützung des Metallschlauches oder Balges gegen betriebsbedingte Längenänderungen, wobei zwischen Metallschlauch oder Balg und Geflechtsschlauch wenigstens ein den Metallschlauch oder Balg umfangendes, in seiner Länge auf einen Teil der Länge des Metallschlauches oder Balges begrenztes, radial über den Außendurchmesser des Metallschlauches oder Balges vorstehendes Abstandselement angeordnet ist.

Bei derartigen Leitungselementen können die Metallschläuche oder Bälge aus einem nahtlos gezogenen Rohr durch Anbringen einer schraubengangförmigen oder ringförmigen Wellung hergestellt sein. Dabei kann das Rohr ein- oder mehrwandig sein mit gegebenenfalls unterschiedlichen Materialien für die einzelnen Wandungen.

Die Metallschläuche oder Bälge können aber auch durch schraubengangförmiges Wickeln eines ein- oder mehrlagigen, wellenförmig vorprofilierten Bandes hergestellt werden, wobei die Bandbreite wenigstens zwei benachbarte Wellenberge mit dazwischen liegendem Wellental bzw. zwei benachbarte Wellentäler mit dazwischen liegendem Wellenberg umfaßt. Auch hier kann bei mehrlagigen Bändern für die einzelnen Bandlagen unterschiedliches Material gewählt sein.

Ebenso kommen auch solche gewickelten Metallschläuche oder Bälge in Frage, bei denen die Wellenberge innen durch ein sich axial erstreckendes Bandstück überdeckt sind. Dieses kann Bestandteil eines zusätzlich eingewickelten Bandes sein, es kann jedoch auch mit dem Band zur Herstellung des Schlauches oder Balges einstückig verbunden sein, wie dies aus der DE 26 45 946 bekannt ist.

Ferner betrifft die Erfindung auch Agraffschläuche, die durch schraubengangförmiges Wickeln wenigstens eines Metallbandes hergestellt sind, indem benachbarte Bandkanten miteinander verfalzt werden. Auch Kombinationen dieser beiden Schlaucharten sind möglich, wie dies beispielsweise durch die EP-A-0 282 689 bekannt ist.

Die Metallschläuche oder Bälge und damit das Leitungselement haben üblicherweise Kreisquerschnitt. In Frage kommt jedoch auch je nach den Gegebenheiten des Verwendungszweckes beispielsweise ein ovaler oder polygonaler, also vieleckiger Querschnitt.

Damit sich nun der flexible Metallschlauch oder Balg im Betrieb nicht ungewöhnlich längen kann, erhält er eine mit seinen Enden fest verbundene Längsabstützung in Form eines Geflechtsschlauches aus Metall. Ein solcher Geflechtsschlauch hat die Eigenart, sich bei Längung radial zusammenzuschnüren. Dabei kommt er auf dem Metallschlauch oder Balg in Anlage und verhindert somit eine weitere Längung. Dieser Vorgang führt jedoch zu einer stoßartigen Belastung mit sehr steil ansteigender Federcharakteristik, mit der eine starke Materialbeanspruchung sowie eine unangenehme Geräuschentwicklung einhergeht.

Bei einem Leitungselement der eingangs genannten Art, wie es durch die GB-A-1 291 253 bekannt ist, ist hier nun teilweise bereits dadurch Abhilfe geschaffen, daß auf dem Metallschlauch oder Balg ein über dessen Außendurchmesser vorstehendes, ringförmiges starres Abstandselement radial schwimmend gelagert ist. Dieses dient zwar an sich einer Aufspreizung des Geflechtsschlauches, damit sich bei Angularbewegungen des dort beschriebenen Kompensators das Geflecht dieser Bewegung besser anpassen kann bzw. dieser Bewegung besser folgen kann. Gleichzeitig kann sich jedoch auch der Geflechtsschlauch über den Bereich seiner freien Länge bei einer Längenvergrößerung des Metallschlauches oder Balges radial etwas einschnüren, was einen gewissen Dämpfungseffekt zur Folge hat. Die damit erzielte Wirkung ist jedoch verhältnismäßig gering und zur Vermeidung der vorbeschriebenen unangenehmen Folgen nicht ausreichend.

Aufgabe der Erfindung ist es daher, ein Leitungselement der eingangs genannten Art so auszugestalten, daß sich bei dessen Längung eine weich ansteigende Federcharakteristik und entsprechend eine weicher ansteigende Belastung des Geflechtsschlauches ergibt.

Diese Aufgabe ist erfindungsgemäß dadurch gelöst, daß das Abstandselement radial federnd ausgebildet ist.

Diese Maßnahme hat die Wirkung, daß nunmehr die Federwirkung des Geflechtsschlauches mit einer weiteren Federwirkung kombiniert ist, womit die erfindungsgemäße Bauform eine weiche ansteigende Federcharakteristik liefert, die auch keinen Knick aufweist, sobald der Geflechtsschlauch am Metallschlauch oder Balg anzuliegen und zu tragen beginnt. Damit ist gleichzeitig die Möglichkeit gegeben, die sich damit ergebende Gesamtfederwirkung in ihrem Verlauf bestmöglich an bestimmte gewünschte Verhältnisse anzupassen.

Das Abstandselement kann ein auf dem Metallschlauch oder Balg sitzender Ring aus Metall sein und es kann der Ring über den Umfang gesehen wenigstens eine Teilungsstelle aufweisen.

Ferner kann vorgesehen sein, daß die der Teilung benachbarten Ringenden sich in Umfangsrichtung überlappen. Dazu können die Ringenden in Umfangsrichtung keilförmig ausgebildet sein oder können die Ringenden im Überlappungsbereich axial verjüngt sein.

Zur Querschnittsgestaltung des Ringmaterials kann vorgesehen sein, daß der Ring radial außen eine in Axialrichtung gehende, gewölbte Querschnittserweiterung aufweist, so daß dort der Geflechtsschlauch eine größere Anlagefläche vorfindet. Ferner kann vorgesehen sein, daß der Axialquerschnitt des Ringes nach radial innen verjüngt, um ihn so besser in die wellenförmige oder sonstige Profilierung des Metallschlauches oder Balges einsetzen zu können.

Zur Gestaltung des Abstandselementes kann jedoch auch vorgesehen sein, daß dieses als mindestens eine nach radial außen gerichtete Welle aufweisende hohlzylindrische Hülse aus Metall ausgebildet ist, wobei die Welle zweckmäßig an der Hülse umlaufend ist. Ein solches Abstandselement hat grundsätzlich die gleichen Eigenschaften wie der vorbeschriebene Ring.

Um dieser Gestaltung eine noch erhöhte radiale Federwirkung zu geben, kann vorgesehen sein, daß die Hülse wenigstens im Bereich der Welle mit über den Umfang gleichmäßig verteilten, achsparallelen Längsschlitzen und dadurch gebildeten Stegen versehen ist. Auf diese Weise sind durch die Stege Federn nach Art von Blattfedern gebildet, die unter der durch den Geflechtsschlauch ausgeübten Einschnürkraft bei Längung des Leitungselementes federnd nach radial innen ausweichen können.

Die Charakteristik dieser Federn kann einmal durch die Materialstärke der Hülse bestimmt werden, wobei im allgemeinen dünnwandiges Material bevorzugt sein wird. Die Charakteristik kann aber auch durch die Steilheit der Flanken der Welle beeinflußt werden, wobei steil verlaufende Wellenflanken zu einer härteren und flach verlaufende Wellenflanken zu einer weicheren Federungseigenschaft führen.

Zweckmäßig kann es ferner sein, daß die Hülse mit einem benachbarten Ende des Metallschlauches oder Balges wenigstens mittelbar verbunden ist, wobei auch vorgesehen werden kann, daß mit jedem Ende des Metallschlauches oder Balges eine Hülse wenigstens mittelbar verbunden ist.

Nach einer anderen Bauform kann vorgesehen sein, daß die Hülse im Bereich der Längsmitte des Metallschlauches oder Balges angeordnet ist, sich von dort aus also der Geflechtsschlauch zu beiden Enden hin über gleiche Längen des Leitungselementes frei mit Abstand gegenüber dem Metallschlauch oder Balg erstreckt.

Schließlich kann auch vorgesehen werden, daß jedes freie Hülsenende eine nach radial außen gerichtete Aufbiegung aufweist, um ein Verhaken mit dem Profil des Metallschlauches oder Balges zu verhindern.

Weitere Einzelheiten und Merkmale der Erfindung ergeben sich aus der nachfolgenden Beschreibung von Ausführungsformen, die auf der Zeichnung dargestellt sind. In der Zeichnung zeigen:
- Figur 1: eine erste erfindungsgemäße Bauform eines Leitungselementes in Seitenansicht, teilweise im Axialschnitt;

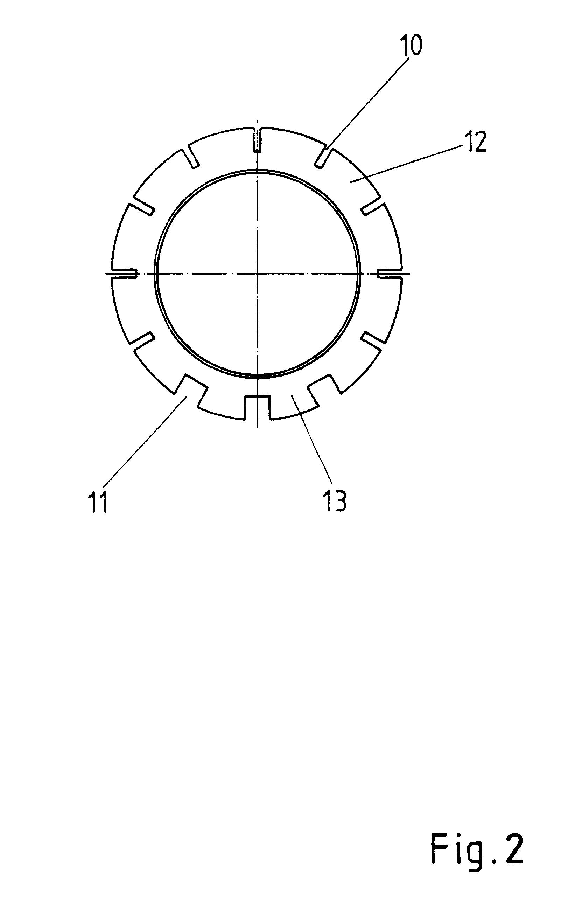

- Figur 2: die Stirnansicht der hohlzylindrischen Hülse mit Welle gemäß Figur 1;
- Figuren 3 und 4: abgewandelte Bauformen des Leitungselementes gemäß Figur 1;
- Figur 5: eine weitere erfindungsgemäße Bauform eines Leitungselementes in geschnittener seitlicher Halbansicht;
- Figur 6: eine Abwandlung der Bauform gemäß Figur 5;
- Figur 7: eine Ringgestaltung aus den Bauformen gemäß 5 und 6;
- Figur 8: eine andersartige Ringgestaltung für die Bauformen gemäß Figur 5 und 6 und
- Figuren 9 bis 12: Einzelheiten zu den Ringen gemäß Figur 7 und 8.

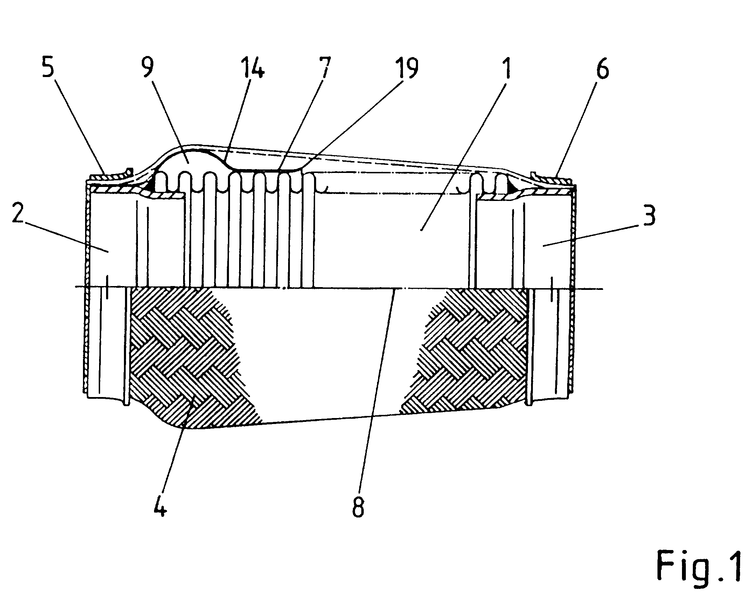

Figur 1 zeigt ein Leitungselement, insbesondere für die Abgasleitung von Verbrennungskraftmaschinen. Bei ihm ist ein der eigentlichen Abgasführung dienender, ringförmig gewellter Metallschlauch oder Balg 1 an seinen Enden mit Leitungsstutzen 2, 3 verschweißt, über die das Leitungselement auf weiterführende Rohrleitungen der Abgasleitung aufsteckbar ist.

Umgeben ist der Metallschlauch oder Balg 1 von einem Geflechtsschlauch 4 aus Metall, dessen Enden auf den Leitungsstutzen 2, 3 mit Hilfe von aufgepreßten Ringen 5, 6 festgelegt sind.

Auf der linken Seite des Leitungselementes ist zwischen Metallschlauch oder Balg 1 und Geflechtsschlauch 4 eine hohlzylindrische Hülse 7 mit einer um die Achse 8 umlaufenden Welle 9 als Abstandselementangeordnet, die beim normalen Betriebszustand den Geflechtsschlauch 4 neben der Welle 9 vom Metallschlauch oder Balg 1 distanziert.

Erfährt das Leitungselement während des Betriebs eine Längung, so führt dies zu einer radialen Einschnürung des Geflechtsschlauches 4 im Bereich zwischen der Welle 9 und dem rechten Ende des Metallschlauches oder Balges 1 bzw. dem Ring 6 so lange, bis der Geflechtsschlauch 4 in Anlage an den Metallschlauch oder Balg 1 bzw. die Hülse 7 gelangt. Mit dieser Einschnürung des Geflechtsschlauches 4 verbindet sich bezüglich der Längung des Leitungselementes eine Abbremswirkung sowie ein Dämpfungseffekt. Gleichzeitig mit der genannten Längenänderung des Leitungselementes wird aber auch die Welle 9 nach radial innen gedrückt, was ebenfalls eine abgefederte Annäherung des Leitungselementes an die maximal zugelassene Länge ergibt.

Die Hülse 7 und die Welle 9 können dünnwandig und vollwandig umlaufend ausgebildet sein. Je nach Ausbildung der Hülse 7 oder auch zusätzlich kann jedoch vorgesehen sein, die Welle 9 mit gleichmäßig über den Umfang verteilten schmalen Längsschlitzen 10 oder breiteren Längsschlitzen 11 auszustatten, wodurch zwischen den Längsschlitzen breitere Stege 12 oder schmalere Stege 13 gebildet werden, die dann nach Art von Blattfedern wirken. Über die Breite der Schlitze 10, 11 bzw. der Stege 12, 13 läßt sich die Federungseigenschaft der Welle 9 feinfühlig den jeweiligen Betriebserfordernissen anpassen.

Eine weitere Anpassungsmöglichkeit ist durch die Steilheit der Flanken 14 der Welle 9 gegeben. Werden die Flanken 14 steiler ausgebildet, ergibt die Welle 9 eine härtere Feder. Umgekehrt führen verhältnismäßig flach verlaufende Flanken 14 zu einer entsprechend weichen Eigenschaft der Welle 9.

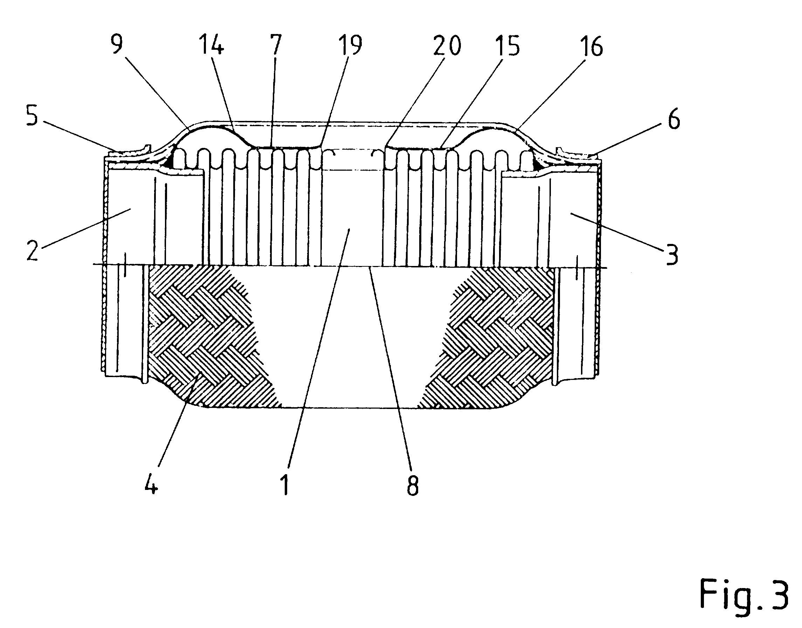

Die Bauform gemäß Figur 3, bei der die Teile mit den in Figur 1 verwendeten Bezeichnung versehen sind, unterscheidet sich von dem Gegenstand gemäß Figur 1 dadurch, daß auch auf der rechten Seite des Leitungselementes eine hohlzylindrische Hülse 15 mit einer Welle 16 als Abstandselement vorhanden ist. Für die Ausbildung und Wirkungsweise dieser Hülse gilt das zu der Hülse 7 im Zusammenhang mit Figur 1 Gesagte entsprechend.

Beiden Bauformen gemäß Figur 1 und 3 ist gemeinsam, daß die Hülsen 7 bzw. 15 im Bereich des ihnen benachbarten Endes des Metallschlauches oder Balges 1 zusammen mit dem Geflechtsschlauch 4 zwischen Leitungsstutzen 2 bzw. 3 und Ring 5 bzw. 6 eingefangen und dadurch axial festgelegt sind.

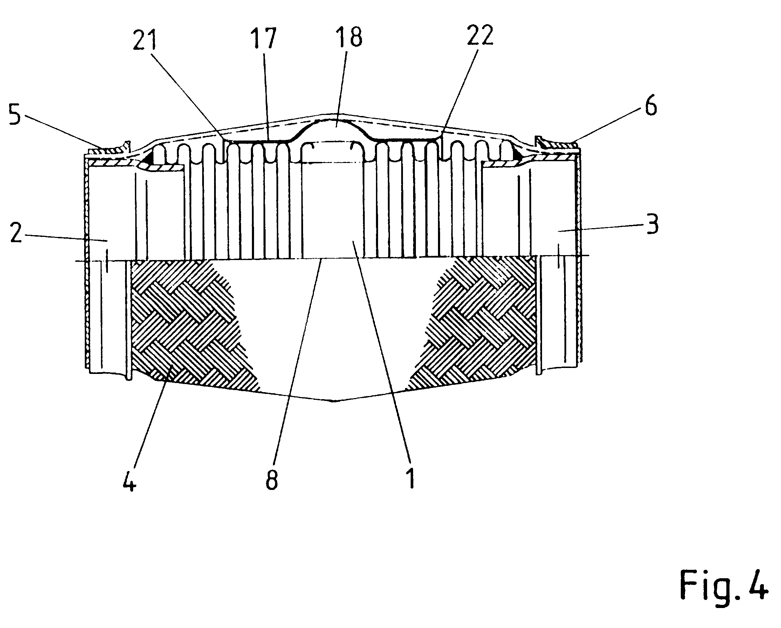

Die Bauform gemäß Figur 4, für die wiederum wiederkehrende Teile mit der Bezeichnung gemäß Figur 1 versehen sind, bedient sich als Abstandselement einer Hülse 17 mit einer Welle 18, die auf der Längsmitte des Metallschlauches oder Balges 1 angeordnet ist. In diesem Falle ist also der Geflechtsschlauch 4 auf beiden Seiten der Welle 18 vom Metallschlauch oder Balg 1 bzw. der Hülse 17 abgehoben, so daß er sich bei einer Längung des Metallschlauches oder Balges 1 entsprechend auch auf beiden Seiten einschnüren wird mit den daraus resultierenden, bereits anhand der Figur 1 beschriebenen Wirkungen.

Allen anhand der Figuren 1, 3 und 4 gezeigten Hülsen 15 und 17 ist noch gemeinsam, daß ihre freien Enden eine nach radial außen gerichtete Aufbiegung 19, 20, 21 bzw. 22 aufweisen, um deren axialer Gleitbewegung auf dem Metallschlauch oder Balg 1 in Verbindung mit der Arbeitsweise der Welle 9, 16, 18 kollisionsfrei zu gestalten.

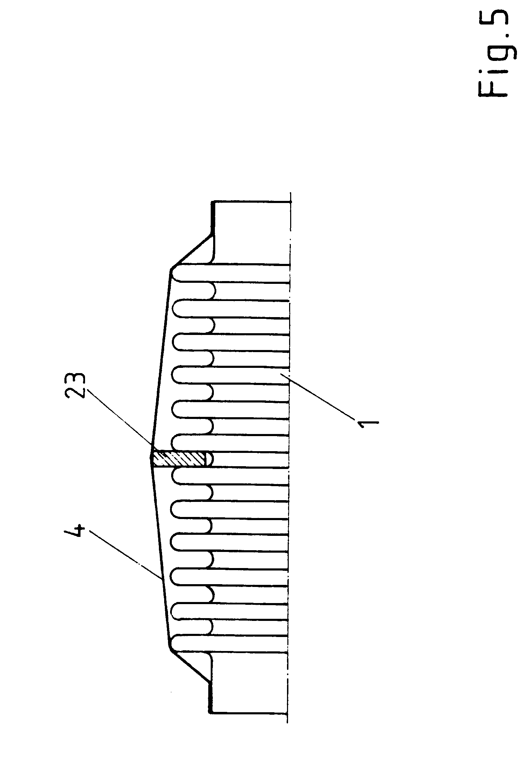

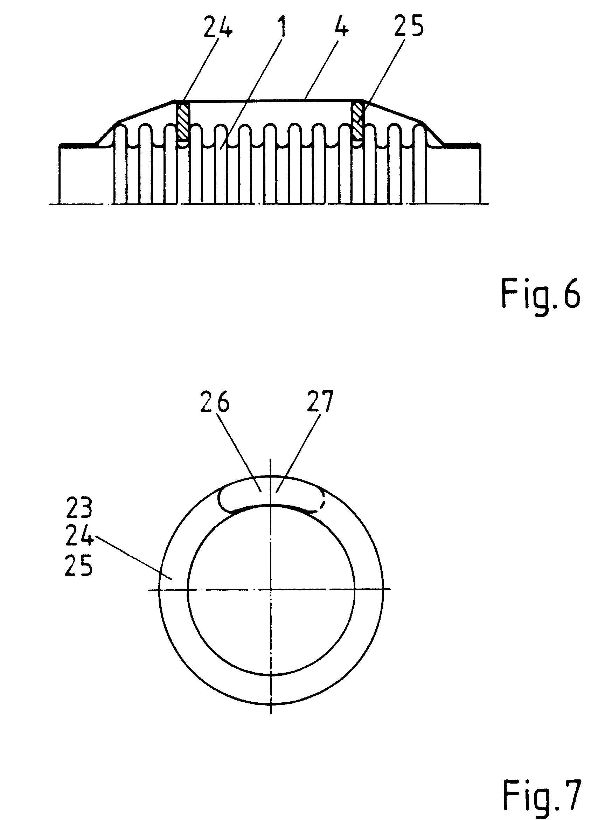

Figur 5 zeigt in vereinfachter Schnittdarstellung wieder unter Verwendung der bisher eingeführten Bezeichnungen ein Leitungselement mit einem Metallschlauch oder Balg 1 und diesen außen umgebendem Geflechtsschlauch 4, wobei in einem Wellental des Metallschlauches oder Balges 1 ein Ring 23 als Abstandselement eingesetzt ist. Dieser Ring kann wie dargestellt in der Mitte des Metallschlauches oder Balges 1 sitzen, er kann jedoch auch mehr zu einem der Enden des Leitungselementes hin verschoben angeordnet sein. Eine der Figur 3 entsprechende Variante kann gemäß Figur 6 auch darin bestehen, daß zwei Ringe 24, 25 im Bereich der Enden des Leitungselementes angeordnet werden.

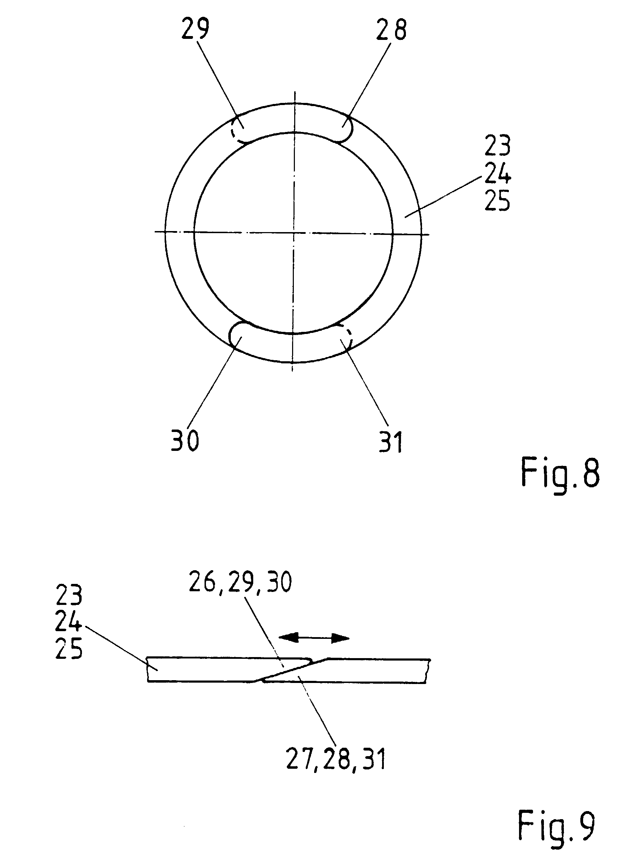

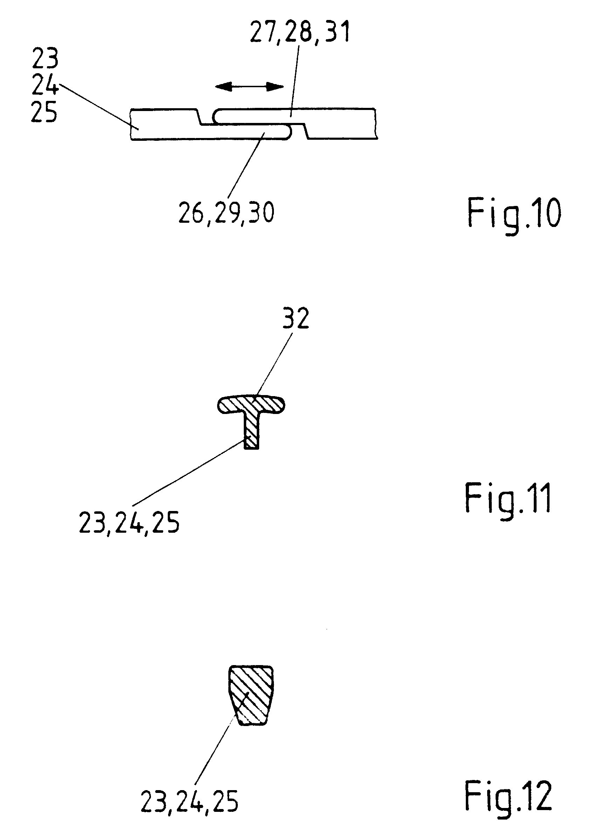

Um den Ringen 23 bis 25 ebenfalls eine Federwirkung zu eigen zu machen, wie dies bei den Wellen 9 gemäß den Figuren 1, 3 und 4 geschah, können die Ringenden 26 bis 31 sich an den Trennstellen in Umfangsrichtung überlappend ausgebildet sein, wofür die Figuren 7 bis 10 Beispiele zeigen. Dabei sind gemäß Figur 9 die Ringenden keilförmig ausgebildet, während sie gemäß Figur 10 einen verjüngten Querschnitt haben so, daß sich die Ringenden in Umfangsrichtung gegeneinander bewegen können.

Bezüglich des Querschnittes des Ringprofils kann vorgesehen sein, daß dieser radial außen eine in Axialrichtung des Leitungselementes gehende, gewölbte Erweiterung 32 aufweisen, um dem Geflechtsschlauch 4 eine reibungsarme, bessere Abstützung zu bieten.

Schließlich kann das Querschnittsprofil der Ringe gemäß Figur 12 nach radial innen verjüngt sein, um Kantenpressung gegenüber dem Metallschlauch oder Balg 1 zumindest weitestgehend zu vermeiden.

## Patentansprüche

1. Leitungselement, insbesondere für die Abgasleitung von Verbrennungskraftmaschinen, bestehend aus einem Metallschlauch oder Balg (1) mit über seine Länge im wesentlichen gleichbleibendem Außendurchmesser und mit einem außerhalb des Metallschlauches oder Balges (1) entlang diesem angeordneten und mit dessen Enden verbundenen Geflechtsschlauch (4) aus Metall zur flexiblen Abstützung des Metallschlauches oder Balges (1) gegen betriebsbedingte Längenänderungen, wobei zwischen Metallschlauch oder Balg (1) und Geflechtsschlauch (4) wenigstens ein den Metallschlauch oder Balg (1) umfangendes, in seiner Länge auf einen Teil der Länge des Metallschlauches oder Balges (1) begrenztes, radial über den Außendurchmesser des Metallschlauches oder Balges (1) vorstehendes Abstandselement (7, 9, 15 - 18, 23 - 25) angeordnet ist,
dadurch gekennzeichnet,
daß das Abstandselement (7, 9, 15 - 18, 23 - 25) radial federnd ausgebildet ist.

2. Leitungselement nach Anspruch 1,
dadurch gekennzeichnet,
daß das Abstandselement ein auf dem Metallschlauch oder Balg (1) sitzender Ring (23 - 25) aus Metall ist, und
daß der Ring (23 - 25) über den Umfang gesehen wenigstens eine Teilungsstelle aufweist.

3. Leitungselement nach Anspruch 2,
dadurch gekennzeichnet,
daß die der Teilung benachbarten Ringenden (26 - 31) sich in Umfangsrichtung überlappen.

4. Leitungselement nach Anspruch 3,
dadurch gekennzeichnet,
daß die Ringenden (26 - 31) in Umfangsrichtung keilförmig ausgebildet sind (Figur 9).

5. Leitungselement nach Anspruch 3,
dadurch gekennzeichnet,
daß die Ringenden (26 - 31) im Überlappungsbereich axial verjüngt sind (Figur 10).

6. Leitungselement nach einem oder mehreren der Ansprüche 2 bis 5,
dadurch gekennzeichnet,
daß der Ring (23 - 25) radial außen eine in Axialrichtung gehende, gewölbte Querschnittserweiterung (32) aufweist.

7. Leitungselement nach einem oder mehreren der Ansprüche 2 bis 6,
dadurch gekennzeichnet,
daß der Axialquerschnitt des Ringes (23 - 25) nach radial innen verjüngt ist (Figur 12).

8. Leitungselement nach Anspruch 1,
dadurch gekennzeichnet,
daß das Abstandselement als mindestens eine nach radial außen gerichtete Welle (9, 16, 18) aufweisende hohlzylindrische Hülse (7, 15, 17) aus Metall ausgebildet ist.

9. Leitungselement nach Anspruch 8,
dadurch gekennzeichnet,
daß die Welle (9, 16, 18) umlaufend ist.

10. Leitungselement nach Anspruch 8 oder 9,
dadurch gekennzeichnet,
daß die Hülse (7, 15, 17) wenigstens im Bereich der Welle (9, 16, 18) mit über den Umfang gleichmäßig verteilten, achsparallelen Längsschlitzen (10, 11) und dadurch gebildeten Stegen (12, 13) versehen ist.

11. Leitungselement nach Anspruch 10,
dadurch gekennzeichnet,
daß die Stege (13) schmal ausgebildet sind.

12. Leitungselement nach einem der Ansprüche 8 bis 11,
dadurch gekennzeichnet,
daß die Welle (9, 16, 18) steil verlaufend ausgebildet ist.

13. Leitungselement nach einem der Ansprüche 8 bis 11,
dadurch gekennzeichnet,
daß die Welle (9, 16, 18) flach verlaufend ausgebildet ist.

14. Leitungselement nach einem oder mehreren der Ansprüche 8 bis 13,
dadurch gekennzeichnet,
daß die Hülse (7, 15) mit einem benachbarten Ende des Metallschlauches oder Balges (1) wenigstens mittelbar verbunden ist.

15. Leitungselement nach einem oder mehreren der Ansprüche 8 bis 14,
dadurch gekennzeichnet,
daß mit jedem Ende des Metallschlauches oder Balges (1) eine Hülse (7, 15) wenigstens mittelbar verbunden ist.

16. Leitungselement nach einem oder mehreren der Ansprüche 8 bis 14,
dadurch gekennzeichnet,
daß die Hülse (17) im Bereich der Längsmitte des Metallschlauches oder Balges (1) angeordnet ist.

17. Leitungselement nach einem oder mehreren der Ansprüche 8 bis 16,
dadurch gekennzeichnet,
daß jedes freie Hülsenende eine nach radial außen gerichtete Aufbiegung (19 - 22) aufweist.

## Claims

1. Conduit element, especially for the exhaust conduit of internal combustion engines, consisting of a metal hose or bellows (1) with an outside diameter which is substantially constant over its length and with a braided hose (4) of metal which is disposed outside of the metal hose or bellows (1) along the latter and connected to the ends thereof for flexibly supporting the metal hose or bellows (1) against operation-related changes in length, wherein at least one spacer element (7, 9, 15 - 18) is disposed between the metal hose or bellows (1) and the braided hose (4), which element encompasses the metal hose or bellows (1), is restricted in length to a part of the length of the metal hose or bellows (1) and projects radially beyond the outside diameter of the metal hose or bellows (1), characterised in that the spacer element (7, 9, 15 - 18, 23 - 25) is formed so as to be radially resilient.

2. Conduit element according to claim 1, characterised in that the spacer element is a ring (23 - 25) of metal which is seated on the metal hose or bellows (1), and that, viewed over the circumference, the ring (23 - 25) comprises at least one division point.

3. Conduit element according to claim 2, characterised in that the ring ends (26 - 31) which are adjacent to the division overlap in the circumferential direction.

4. Conduit element according to claim 3, characterised in that the ring ends (26 - 31) are wedge-shaped in the circumferential direction (Figure 9).

5. Conduit element according to claim 3, characterised in that the ring ends (26 - 31) are axially tapered in the overlap region (Figure 10).

6. Conduit element according to one or more of claims 2 to 5, characterised in that, considered radially, the ring (23 - 25) comprises on the outside an arched cross-sectional enlargement (32) extending in the axial direction.

7. Conduit element according to one or more of claims 2 to 6, characterised in that the axial cross section of the ring (23 - 25) is tapered radially inwards (Figure 12).

8. Conduit element according to claim 1, characterised in that the spacer element is formed as at least one hollow cylindrical sleeve (7, 15, 17) of metal which comprises a shaft (9, 16, 18) directed radially outwards.

9. Conduit element according to claim 8, characterised in that the shaft (9, 16, 18) rotates.

10. Conduit element according to claim 8 or 9, characterised in that the sleeve (7, 15, 17) is provided at least in the region of the shaft (9, 16, 18) with axially parallel longitudinal slots (10, 11), which are uniformly distributed over the circumference, and webs (12, 13) formed thereby.

11. Conduit element according to claim 10, characterised in that the webs (13) are narrow.

12. Conduit element according to one of claims 8 to 11, characterised in that the shaft (9, 16, 18) is formed so as to extend at a steep inclination.

13. Conduit element according to one of claims 8 to 11, characterised in that the shaft (9, 16, 18) is formed so as to extend at a shallow angle.

14. Conduit element according to one or more of claims 8 to 13, characterised in that the sleeve (7, 15) is at least indirectly connected to an adjacent end of the metal hose or bellows (1).

15. Conduit element according to one or more of claims 8 to 14, characterised in that a sleeve (7, 15) is at least indirectly connected to each end of the metal hose or bellows (1).

16. Conduit element according to one or more of claims 8 to 14, characterised in that the sleeve (17) is disposed in the region of the longitudinal centre of the metal hose or bellows (1).

17. Conduit element according to one or more of claims 8 to 16, characterised in that each free sleeve end comprises an upward bend (19-22) directed radially outwards.

## Revendications

1. Elément de conduite, notamment pour la conduite d'échappement de moteurs à combustion interne, constitué d'un tuyau métallique souple ou tuyau annelé (1), de diamètre extérieur essentiellement constant sur sa longueur, avec une gaine tressée (4) en métal disposée à l'extérieur du tuyau métallique souple ou tuyau annelé (1) le long de ce dernier et assemblée à ses extrémités, destinée à soutenir le tuyau métallique souple ou tuyau annelé (1) à l'encontre de modifications de longueur dues au service, au moins un élément d'écartement (7, 9, 15 à 18, 23 à 25) étant disposé entre le tuyau métallique souple ou tuyau annelé (1) et la gaine tressée (4), élément qui embrasse le tuyau métallique souple ou tuyau annelé (1), dont la longueur est limitée à une partie de la longueur du tuyau métallique souple ou tuyau annelé (1), et qui dépasse radialement du diamètre extérieur du tuyau métallique souple ou tuyau annelé (1),
**caractérisé** en ce que l'élément d'écartement (7, 9, 15 à 18, 23 à 25) est réalisé radialement élastique.

2. Elément de conduite selon la revendication 1, **caractérisé** en ce que l'élément d'écartement est une bague (23 à 25) en métal montée sur le tuyau métallique souple ou tuyau annelé (1), et en ce que la bague (23 à 25) présente, vue sur sa circonférence, au moins un point de division.

3. Elément de conduite selon la revendication 2, **caractérisé** en ce que les extrémités (26 à 31) de la bague qui sont voisines de la division se chevauchent en direction circonférentielle.

4. Elément de conduite selon la revendication 3, **caractérisé** en ce que les extrémités (26 à 31) de la bague sont réalisées en forme de coin en direction circonférentielle (figure 9).

5. Elément de conduite selon la revendication 3, **caractérisé** en ce que les extrémités (26 à 31) de la bague sont axialement rétrécies dans la région de chevauchement (figure 10).

6. Elément de conduite selon une ou plusieurs des revendications 2 à 5, **caractérisé** en ce que la bague (23 à 25) présente, radialement vers l'extérieur, un élargissement de section (32) bombé, s'étendant en direction axiale.

7. Elément de conduite selon une ou plusieurs des revendications 2 à 6, **caractérisé** en ce que la section axiale de la bague (23 à 25) est rétrécie radialement vers l'intérieur (figure 12).

8. Elément de conduite selon la revendication 1, **caractérisé** en ce que l'élément d'écartement est réalisé sous la forme d'au moins une douille (7, 15, 17) en forme de cylindre creux en métal, présentant une ondulation (9, 16, 18) dirigée radialement vers l'extérieur.

9. Elément de conduite selon la revendication 8, **caractérisé** en ce que l'ondulation (9, 16, 18) fait le tour de la douille.

10. Elément de conduite selon la revendication 8 ou 9, **caractérisé** en ce que la douille (7, 15, 17) est pourvue, au moins dans la région de l'ondulation (9, 16, 18), de fentes longitudinales (10, 11) parallèles à l'axe de la douille, uniformément réparties sur la circonférence, et de nervures (12, 13) formées par ces fentes.

11. Elément de conduite selon la revendication 10, **caractérisé** en ce que les nervures (13) sont réalisées étroites.

12. Elément de conduite selon une des revendications 8 à 11, **caractérisé** en ce que l'ondulation (9, 16, 18) est réalisée à pente raide.

13. Elément de conduite selon une des revendications 8 à 11, caractérisé en ce que l'ondulation (9, 16, 18) est réalisée à pente plate.

14. Elément de conduite selon une ou plusieurs des revendications 8 à 13, **caractérisé** en ce que la douille (7, 15) est assemblée au moins indirectement à une extrémité voisine du tuyau métallique souple ou tuyau annelé (1).

15. Elément de conduite selon une ou plusieurs des revendications 8 à 14, **caractérisé** en ce qu'une douille (7, 15) est assemblée au moins indirectement à chaque extrémité du tuyau métallique souple ou tuyau annelé (1).

16. Elément de conduite selon une ou plusieurs des revendications 8 à 14, **caractérisé** en ce que la douille (17) est disposée dans la région du milieu longitudinal du tuyau métallique souple ou tuyau annelé (1).

17. Elément de conduite selon une ou plusieurs des revendications 8 à 16, **caractérisé** en ce que chaque extrémité libre de la douille présente un relèvement (19 à 22) dirigé radialement vers l'extérieur.
